(19) Europäisches Patentamt
European Patent Office
Office européen des brevets

(11) **EP 1 540 858 B1**

(12) **EUROPÄISCHE PATENTSCHRIFT**

(45) Veröffentlichungstag und Bekanntmachung des Hinweises auf die Patenterteilung:
**29.10.2008 Patentblatt 2008/44**

(21) Anmeldenummer: **03797242.9**

(22) Anmeldetag: **13.08.2003**

(51) Int Cl.:
*H04B 10/148* *(2006.01)*    *H04J 14/06* *(2006.01)*

(86) Internationale Anmeldenummer:
**PCT/EP2003/008997**

(87) Internationale Veröffentlichungsnummer:
**WO 2004/028046 (01.04.2004 Gazette 2004/14)**

(54) **VERFAHREN ZUR BERTRAGUNG VON OPTISCHEN POLARISATIONSMULTIPL EXSIGNALEN**

METHOD FOR THE TRANSMISSION OF POLARISATION MULTIPLEXED OPTICAL SIGNALS

PROCÉDÉ DE TRANSMISSION DE SIGNAUX OPTIQUES MULTIPLEXÉS EN POLARISATION

(84) Benannte Vertragsstaaten:
**DE ES FR GB IT**

(30) Priorität: **17.09.2002 DE 10243141**

(43) Veröffentlichungstag der Anmeldung:
**15.06.2005 Patentblatt 2005/24**

(73) Patentinhaber: **Nokia Siemens Networks GmbH & Co. KG**
**81541 München (DE)**

(72) Erfinder:
• **HECKER, Nancy**
**6020 Innsbruck (AT)**

• **SPINNLER, Bernhard**
**82041 München (DE)**
• **SEBALD, Georg**
**81375 München (DE)**
• **CALABRO, Stefano**
**81375 München (DE)**
• **GOTTWALD, Erich**
**83607 Holzkirchen (DE)**

(56) Entgegenhaltungen:
**EP-A- 0 445 943        EP-A- 0 564 167**
**US-A- 5 008 958**

**Beschreibung**

Die Erfindung betrifft ein Verfahren zur Übertragung von optischen Polarisationsmultiplexsignalen nach dem Oberbegriff des Anspruchs 1.

Bei optischen Wellenlängen-Multiplexsystemen sind Bitraten von 10 GBit/s je Kanal heute üblich. Entwickelt und als Muster realisiert wurden auch bereits 40 GBit/s-Systeme. Diese sind allerdings technisch sehr aufwendig. Besondere Probleme bereiten hierbei Verzerrungen der übertragenen Signale, wie Polarisations-Moden-Dispersion (PMD) und chromatische Dispersion. Zu deren Kompensation werden einen Polarisationssteller und optische Kompensationseinrichtungen verwendet.

Aus der Nachrichtenübertagung sind zahlreiche Modulations- und Codierverfahren bekannt und es wurden zahlreiche Möglichkeiten untersucht, um geeignete Verfahren zu finden, die zu einer deutlichen Verbesserung der Übertragungseigenschaften bei optischen Systemen führen.

In "telcom report" 1/88, Seiten 22 bis 25 ist ein Richtfunksystem beschrieben, das mittels geeigneter Antennen orthogonal polarisierte Signale überträgt. Durch unvollkommene technische Einrichtungen wie schlecht ausgerichtete Antennen und Reflexionen kommt es zu Kreuzpolarisationsstörungen, bei denen ein Signal auf das andere eigentlich orthogonale Signal störend übergreift. Empfangsseitig werden die polarisierten Signale durch separate Antennen getrennt. Zur Beseitigung von Kreuzpolarisationsstörungen sind adaptive Zeitbereichs-Entzerrer vorgesehen. Die Grundidee einer Depolarisationskompensation besteht nun darin, ein Kompensationssignale zu gewinnen und zum jeweiligen Hauptsig nal hinzuzufügen. Ein Frequenzversatz darf nicht auftreten und Zeitverschiebungen zwischen den Signalen müssen ausgeglichen werden. Die bei Richtfunk auftretende Änderung der Polarisation ist jedoch - verglichen mit einer optischen Übertragung über Fasern - gering. Hier kann jede beliebige Polarisation auftreten.

In der Offenlegungsschrift DE 101 56 244 A1, die am 15 November 2001 vorgelegt und am 5 Juni 2003 veröffentlicht wurde, sind eine Anordnung und ein Verfahren zur Übertragung von Polarisationsmultiplexsignalen beschrieben. Sendeseitig wird eine differentielle Phasenmodulation zwischen den orthogonal polarisierten Übertragungssignalen aufgebracht. Diese dient zur Regelung eines gemeinsamen Polarisationstransformators oder für jeden Übertragungskanal getrennter Polarisationstransformatoren durch Auswertung von Interferenzen. Hierdurch soll die Regelgeschwindigkeit bei minimalem Aufwand maximiert werden. Der Polarisationstransformator kann zur Kompensation von ausgebildet sein. Hierzu wird mit Hilfe eines doppelbrechenden Kristalls und unter Verwendung zahlreicher Steuerspannungen die Übertragungsstrecke "invers" nachgebildet, so dass die Pulsmodendispersion kompensiert werden. Die sendeseitigen Maßnahmen sind aus Transparenzgründen häufig nicht erwünscht und eine sowohl schnelle als auch zuverlässige PMD-Regelung im optischen Bereich ist nach wie vor aufwendig.

Aufgabe der Erfindung ist es, bei einer optischen Datenübertragung eine Erhöhung der Übertragungskapazität zu erreichen, ohne dass erhöhte Bandbreiten-Anforderungen für optische und elektrische Systemkomponenten erforderlich sind und den Aufwand weiter zu reduzieren.

Diese Aufgabe wird durch ein Verfahren zur optischen Datenübertragung nach Anspruch 1 gelöst.

Vorteilhafte Weiterbildungen sind in den Unteransprüchen angegeben.

Insbesondere ermöglicht die Kombination von vierstufiger Mehrphasenmodulation und Polarisations-Multiplex-Übertragung bei gleicher Bandbreite und unwesentlich vergrößertem Störabstand eine Vervierfachung der Datenrate. Es werden zwei orthogonal zueinander polarisierte Mehrphasensignale übertragen, wodurch eine minimale Beeinflussung gewährleistet ist. Durch synchrone Übertragung der orthogonalen Mehrphasensignale wird die gegenseitige Beeinflussung weiter minimiert. Die Empfindlichkeit gegenüber PMD und chromatischer Dispersion bleibt gegenüber den bekannten Systemen mit niedrigerer Datenrate gleich oder vergrößert sich nur geringfügig.

Für die Kompensation von störenden Effekten gelten hierbei praktisch die Anforderungen eines herkömmlichen Systems mit einem Viertel der Datenrate.

Als besonders vorteilhaft erweist sich die Verwendung einer vierstufigen differentiellen Phasenmodulation. Bei dieser ist keine aufwendige kohärente Demodulation erforderlich.

Selbstverständlich kann das System auch genutzt werden, um mehrere Datensignale mit niedrigerer parallel zu übertragen. Bei gleichen Datenraten ist eine synchrone Übertragung vorteilhaft, da sich die polarisierten Signale am wenigsten gegenseitig beeinflussen.

Ein wesentlicher Vorteil der Erfindung ist durch eine spezielle Ausgestaltung des Verfahrens auf der Empfangsseite bzw. des Empfängers gegeben. Hierbei wird kein Polarisationssteller mehr benötigt. Ein wesentlicher Bestandteil des Empfängers ist jetzt ein mehrdimensionales Filter, das den Polarisationssteller überflüssig macht und zusätzlich eine Kompensation der Signalverzerrungen ermöglicht.

Bei einem mehrdimensionalen elektrischem Filter muss die Umsetzung der orthogonal polarisierten Signalteile in komplexe elektrische Signale linear erfolgen. So kann ebenfalls eine Entzerrung von PMD und chromatischer Dispersion in der elektrischen Ebene erfolgen.

Bei Verwendung von Differenz-Mehrphasenmodulation ist keine kohärente Demodulation erforderlich. Eine vorteilhafte Ausgestaltung der Demodulatoren ermöglicht eine parallele Ausgabe von Datenbits.

In Abhängigkeit von der zur Verfügung stehenden Schaltkreistechnik können wesentliche Teile des Empfängers einschließlich des mehrdimensionalen Filters und der Demodulatoren digital ausgeführt werden.

Eine Steuerung zur Festlegung der Filterkoeffizienten wird bereits jetzt digital ausgeführt.

Ausführungsbeispiele der Erfindung werden anhand von Figuren näher erläutert. Es zeigt:

| | |
|---|---|
| Figur 1 | den Sendeteil eines Übertragungssystems zur Realisierung der Erfindung, |
| Figur 2 | einen erfindungsgemäßen Empfangsteil, |
| Figur 3 | ein Diagramm zur Erläuterung der Funktion des Empfangsteils, |
| Figur 4 | ein Prinzipschaltbild eines optoelektrischen Umsetzer, |
| Figur 5 | ein Prinzipschaltbild eines komplexen Filters zur Erläuterung der Funktion, |
| Figur 6 | ein Prinzipschaltbild eines vierdimensionalen Filters, |
| Figur 7 | ein Prinzipschaltbild eines Demodulators, |
| Figur 8 | ein Diagramm zur Erläuterung der Funktion, |
| Figur 9 | ein Prinzipschaltbild eines Signalkomponenten verarbeitenden Demodulators, |
| Figur 10 | eine erste Anordnung zur Ermittlung der Filter-Koeffizienten, |
| Figur 11 | eine zweite Anordnung zur Ermittlung der Filter-Koeffizienten und |
| Figur 12 | ein weitgehend digitalisierten Empfangsteil. |

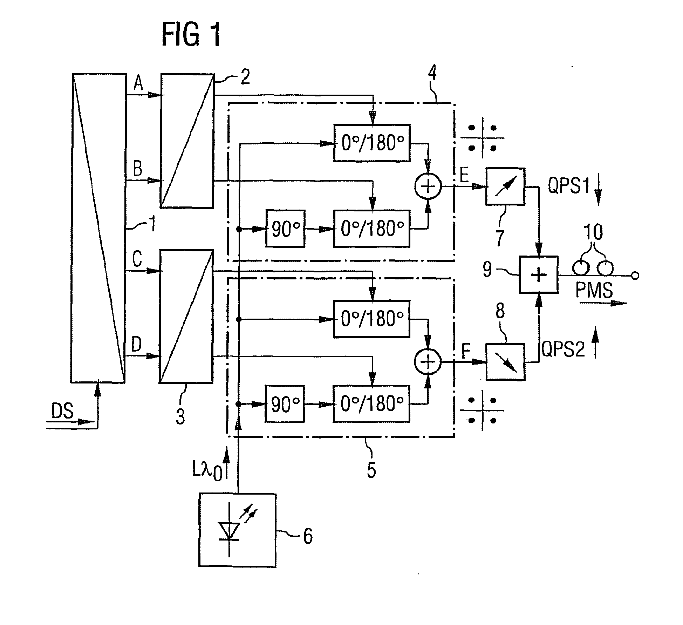

**Figur 1** zeigt ein Ausführungsbeispiel für den Sendeteil eines Übertragungssystems zur Realisierung des erfindungsgemäßen Verfahrens.

Ein Datensignal DS wird in einem Seriell-Parallel-Umsetzer 1 in vier parallele Binärsignale A, B, C und D umgesetzt. Ebenso können vier synchrone Datenströme übertragen werden. Jeweils zwei Datenströme, A, B und C, D werden einem DQPSK-Precoder 2 bzw. 3 (Differenz-Quadratur-Phase-Shift-Keying) zugeführt. Dieser berücksichtigt das vorhergehende und das aktuelle Bitpaar und setzt die Unterschiede zwischen den Bitpaaren in vier mögliche Phasenänderungen von 0, 90, 180 und 270° um. Die Modulatoren 4 und 5 zeigen lediglich mögliche Ausführungsbeispiele. Bei jedem Modulator wird sein oberer Zweig, der eine Phasenlage 0 oder 180° generiert, aktiviert und der untere Zweig, mit dem eine Phasenlage von 90 oder 270° eingestellt wird, zur Erzeugung eines Mehrphasen-Signals (QDPSK-Signals) E aktiviert. Das Resultat sind Phasenlage von 45°, 135°, 225° und 315°. Entsprechend wird mit den Datenströmen C und D verfahren, die im unteren Modulator 5 in das QDPSK-Signals F umgesetzt werden. Zwei Polarisationseinsteller 7 und 8 sorgen dafür, dass ein Ausgangssignal QPS1 eines Modulators 4 (zumindest nahezu) orthogonal zum Ausgangssignal QPS2 des anderen Modulators 5 polarisiert ist. Die so polarisierten Mehrphasen-Signale QPS1 und QPS2 werden in einem Polarisationsstrahlkombinierer 9 zu einem PolarisationsMultiplexsignal PMS zusammengefasst, das über eine Übertragungsfaser 10 ausgesendet wird.

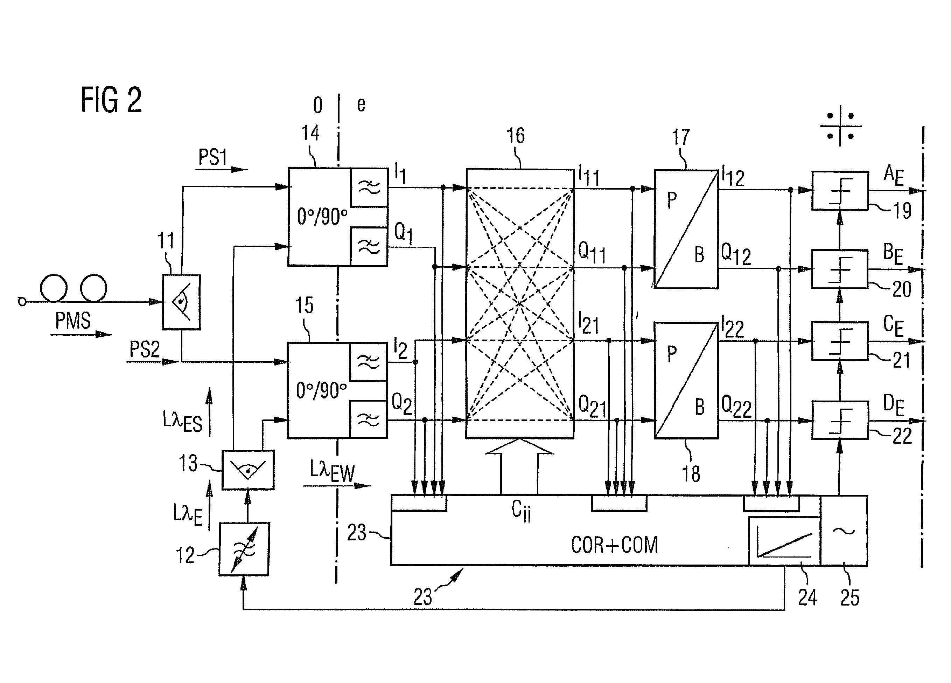

In Figur 2 ist das Prinzipschaltbild eines Empfangsteils zur Realisierung des erfindungsgemäßen Verfahrens dargestellt.

Zunächst soll die prinzipielle Funktion des gesamten Empfangsteils kurz beschrieben werden. Dann werden die einzelnen Elemente - soweit erforderlich - näher beschrieben.

Das empfangene Polarisations-Muliplex-Signal PMS wird einem Polarisationsteiler 11 zugeführt, der es in zwei orthogonal polarisierte Signalteile PS1 und PS2 aufteilt. Der erste polarisierter Signalteil PS1 wird einem ersten optoelektrischen Umsetzer 14 zugeführt; der zweite polarisierte Signalteil PS2 einem gleich aufgebauten zweiten optoelektrischen Umsetzer 15.

Die polarisierten Signalteile PS1 und PS2 werden jeweils in orthogonale Komponenten $I_1$, $Q_1$ bzw. $I_2$, $Q_2$ umgesetzt und einem mehrdimensionalen Filter 16 zugeführt. Dieses kombiniert Anteile der polarisierten Komponenten wieder zu rekonstruierten Signalen $I_{11} + jQ_{11}$ bzw. $I_{21} + jQ_{21}$, die den optischen Signalen QPS1; QPS2 entsprechen. Die rekonstruierten Signale $I_{11} + jQ_{11}$ bzw. $I_{21} + jQ_{21}$ werden unter Verwendung ihrer orthogonalen Signalkomponenten $I_{11}$ und $Q_{11}$ bzw. $I_{21}$ und $Q_{21}$ in den Demodulatoren 17 und 18 demoduliert und in Entscheiderstufen 19 - 22 in empfangsseitige Binärsignale $A_E$, $B_E$, $C_E$ und $D_E$ rückumgesetzt. Eine Steuerung 23 steuert das Filter 16 und die Erzeugung der empfangsseitig benötigten Taktsignale.

Bei der Aufteilung des empfangenen Polarisations-Multiplex-Signals PMS ist nach Figur 2 kein Polarisationssteller vorgesehen. Hierdurch ist aber die Polarisation am Eingang des Polarisationsteilers 11 beliebig, und der erste polarisierte Signalteil PS1 wird nur in einem sehr seltenen Sonderfall mit dem ersten Mehrphasensignal QPS1 übereinstimmen, bei dem auch der zweite polarisierte Signalteil PS2 mit dem zweiten Mehrphasensignal QPS2 übereinstimmt. Meist werden Signalteile PS1 und PS2 Anteile beider Mehrphasensignale QPS1 und QPS2 enthalten, die dann sowohl dem oberen optoelektrischen Umsetzer 14 als auch dem unteren optoelektrischen Umsetzer 15 zugeführt werden.

Prinzipiell können empfangsseitig optische oder elektrische Signale verarbeitet werden. Ebenso ist nach den Umsetzern auch eine Digitalisierung und digitale Verarbeitung möglich.

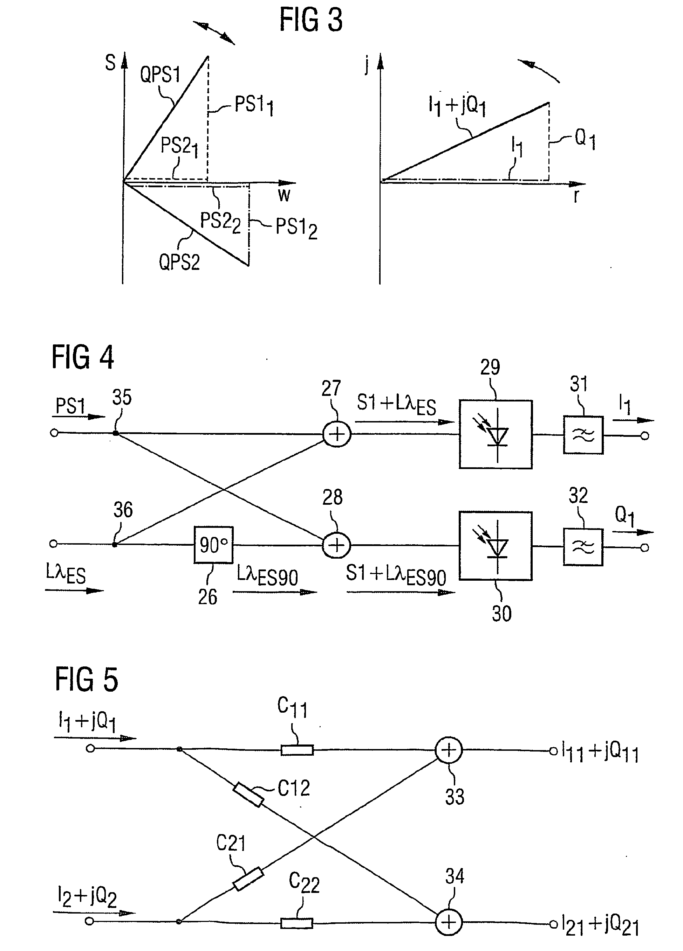

Das Diagramm Figur 3 zeigt in seinen linken Teil Signale am Eingang und an den Ausgängen des Polarisationsteilers 11. Die Polarisationsebenen sind mit s = senkrecht und w = waagerecht bezeichnet. Am Eingang des Polarisationsteilers liegt bei beliebiger Polarisation das Polarisationsmultiplexsignal PMS mit seinen beiden orthogonal polarisierten Mehrphasensignalen QPS1 und QPS2 an. Jedes Signal QPS1 und QPS2 wird durch den Polarisationsteiler 11 jeweils in einen ersten "senkrechten" Signalanteil $PS1_1$ und in einen zweiten "waagerechten" Signalanteil $QS1_1$ bzw. $PS1_2$ und $QS1_2$ aufgeteilt. Die senkrechten Komponenten bilden den polarisierten Signalteil PS1 und die waagerechten den polarisierten Signalteil PS2. Jeder Signalteil beinhaltet also Anteile beider Mehrphasensignale QPS1 und QPS2. Der "senkrecht" polarisierte Signalteil PS1 liegt am Eingang des oberen optoelektrischen Umsetzers 14 an, und der "waagerecht" polarisierte Signalteil PS2 liegt am Eingang des unteren optoelektrischen Umsetzers 15 an (Figur 2).

Die prinzipielle Funktion dieses optoelektrischen (o/e) Umsetzer besteht darin, die polarisierten Teilsignale linear in ein komplexes elektrisches Signal umzusetzen. Die realisierten Umsetzer geben jeweils zwei orthogonale Komponenten $I_1$ und $Q_1$ bzw. $I_2$ und $Q_2$ ab (Q - Imaginärteil bei komplexer Darstellung). Die orthogonalen Komponenten können einfacher weiterverarbeitet werden. Das "komplexe" Ausgangssignal $I_1 + jQ_1$ des optoelektrischen Umsetzers 14 ist in im rechten Teil der Figur 3 dargestellt (r = reelle, j = imaginäre Achse).

Gleichzeitig mit der Umsetzung in ein elektrisches Signal erfolgt zweckmäßigerweise eine Transformation ins Basisband des den Träger modulierenden Signals. Anders ausgedrückt: das optische Signal wird aus dem optischen Bereich linear in die komplexe Basisbandebene transformiert; die anschließend stattfindende elektrische Signalverarbeitung ist dann äquivalent zu einer Verarbeitung des optischen Signals. Zur Umsetzung wird ein Signal $L\lambda_E$ eines empfangsseitigen Trägerfrequenz-Generators (Lasers) verwendet.

**In Figur 4** ist ein Beispiel für einen optoelektrischen Umsetzer 14, 15 dargestellt. Jedem Umsetzer wird zur optoelektrischen Umsetzung außer dem polarisierten Signalteil PS1 bzw. PS2 jeweils noch ein gleich polarisiertes empfangsseitiges Trägerfrequenz-Signal $L\lambda_{ES}$ bzw. $L\lambda_{EW}$ zugeführt, das in diesem Ausführungsbeispiel zumindest näherungsweise die Frequenz des Trägersignals $L\lambda_0$ aufweist. Jeder Umsetzer enthält Splitter 35, 36 zur Aufteilung der Eingangssignale, ein Phasenschieber-Glied 26, zwei Addierer 27, 28, Fotodioden 29, 30 und Tiefpässe 31, 32.

Betrachtet man den oberen Umsetzer 14, so wird als Eingangssignal der polarisierte Signal teil PS1 über den Splitter beiden Addierern 27 und 28 zugeführt. Das Lasersignal $L\lambda_{ES}$ wird ebenfalls in zwei Teilsignale aufgeteilt, davon wird ein Teil direkt zu dem Signal PS1 im ersten Addierer 27 hinzuaddiert. Im zweiten Addierer 28 wird dagegen ein um 90° phasenverschobenes Signal $L\lambda_{ES90}$ hinzuaddiert. Die Summensignale werden jeweils durch die Fotodioden in elektrische Signale umgesetzt, was einer Quadrierung nach Formel (1) entspricht:

$$(1) \qquad \left(S1 + L\lambda_{ES}\right)^2 = S_1^2 + 2S1 \times L\lambda_{ES} + \left(L\lambda_{ES}\right)^2$$

Die Signale S1 und $L\lambda_{0ES}$ bzw. $L\lambda_{ES90}$ sind in ihrer allgemeinen Form in den Gleichungen

$$(2) \qquad S1 = A(t)\sin\left(\omega_0 t + \varphi_A(t)\right)$$

und

$$(3) \qquad L\lambda_{ES} = B(t)\sin\left(\omega_E t + \varphi_{ES}(t)\right) \text{ bzw.}$$

$$(4) \qquad L\lambda_{ES90} = B(t)\sin\left(\omega_{E90} t + \varphi_{ES90}(t)\right)$$

$$(5) \qquad \left(S1 + L\lambda_{ES90}\right)^2 = S_1^2 + 2S1 \times L\lambda_{ES90} + \left(L\lambda_{ES90}\right)^2$$

angegeben.

Der erste und der letzte Term der ausmultiplizierten Summe nach Formel 1 enthalten hochfrequente Schwingungen, die durch den Tiefpass entfernt werden. Der mittlere Term beinhaltet einen Signalanteil, der in eine tiefere Frequenzlage transformiert wurde. Dieser Signalanteil wird als elektrische Komponente $I_1$ herausgefiltert. Entsprechend wird mit dem um 90° phasenverschobenen Signal $L\lambda_{ES90}$ die untere elektrische Komponente $Q_1$ gewonnen.

Im bevorzugten Ausführungsbeispiel weist das empfangsseitige Trägerfrequenzsignal $L\lambda_E$ die Frequenz des Trägers auf, so dass die Transformation in das Basisband erfolgt. Wenn lediglich die Frequenz des gesteuerten Trägerfrequenz-Oszillators 12 aber nicht dessen Phase geregelt wird, ändert sich bei einem endlichen Regelfehler die Phase zwischen dem Träger des Eingangssignals, des Signalteils PS1, und $L\lambda_{ES}$ des optoelektrischen Umsetzers. Dadurch ändert sich bei dem komplexen Ausgangssignal $I_1 + jQ_1$ ebenfalls die Phase und es erfährt eine langsame Rotation. Entsprechend ändern sich auch die Amplituden der Komponenten $I_1$, $Q_1$. Als Folge rotieren dann auch die komplexen Ausgangssignale $I_{11} + jQ_{11}$ und $I_{21} + jQ_{21}$ des Filters um den Nullpunkt der komplexen Ebene.

Bei einer allerdings aufwändigeren kohärenten Demodulation, die Phasensynchronismus zwischen Trägerfrequenzsignal und einem empfangsseitigem erzeugten Trägerfrequenzsignal voraussetzt, weisen die Ausgangssignale $I_1$, $Q_1$ und $I_2$, $Q_2$ eine nur noch von der Polarisation abhängige Orientierung auf. Da diese durch das Filter weitgehend kompensiert wird, bleiben die Winkel der rekonstruierten Signale $I_{11} + jQ_{11}$ und $I_{21} + jQ_{21}$ an den Filterausgängen weitgehend konstant.

Figur 5 zeigt eine vereinfachte komplexe Darstellung des Filters 16. Dieses Filter ermöglicht es, jedes Eingangssignal mit einem Filterkoeffizienten zu multiplizieren und an jeden Ausgang durchzuschalten, wobei die so erzeugten Signalanteile addiert werden. Da das Polarisationsmultiplexsignal PMS eine beliebige Polarisation aufweisen kann, enthalten auch die polarisierten Teilsignale PS1 und PS2 sowohl Anteile des ersten Mehrphasensignals QPS1 als auch des zweiten Mehrphasensignals QPS2. Das steuerbare Filter 16 übernimmt die Aufgabe eines Polarisationsstellers, aus den entsprechenden elektrischen Signalkomponenten $I_1$, $Q_1$ und $I_2$, $Q_2$ die Mehrphasensignale QPS1 und QPS2 in der elektrischen Ebene zu rekonstruieren.

An den beiden Filtereingängen liegen jetzt zwei aus den elektrischen Signalkomponenten $I_1$, $Q_1$ und $I_2$, $Q_2$ gebildete komplexe Signale $I_1 + jQ_1$ und $I_2 + jQ_2$ an. Mittels einer Koeffizientenmatrix $C_{11}$, $C_{12}$, $C_{21}$, $C_{22}$ und zwei Addierern 33, 34 werden das Ausgangssignal $I_{11} + jQ_{11}$, das dem ersten Quadratur-Phasensignal QPS1 entspricht, und das Ausgangssignal $I_{21} + jQ_{21}$, das dem zweiten Quadratur-Mehrphasensignal QPS2 entspricht, in elektrischer Form rekonstruiert. Die rekonstruierten Signale $I_{11} + jQ_{11}$ und $I_{21} + jQ_{21}$ rotieren entsprechend den Eingangssignalen des Filters.

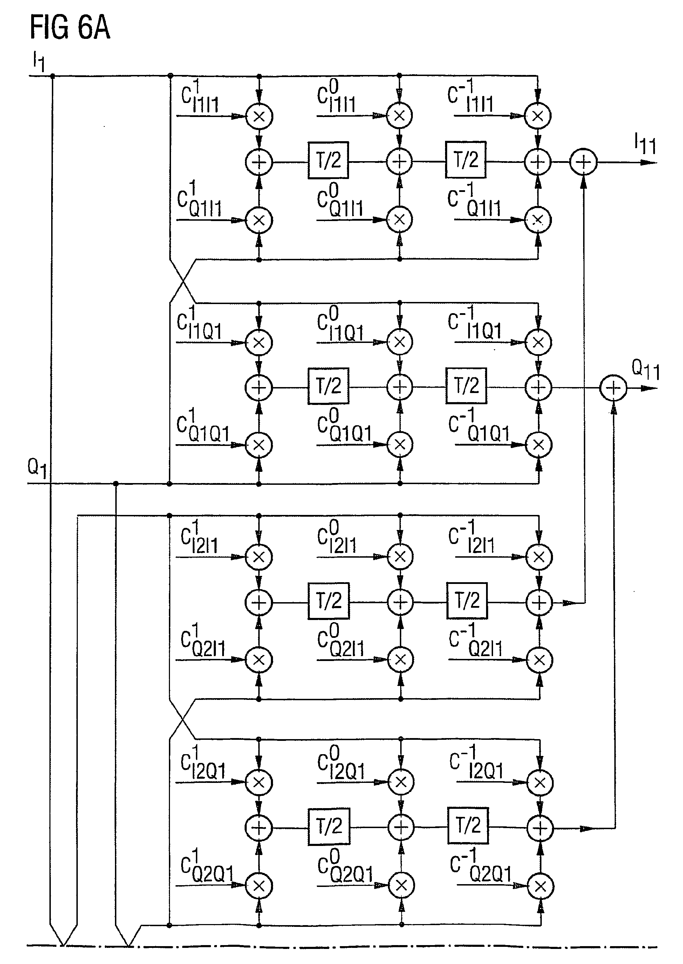

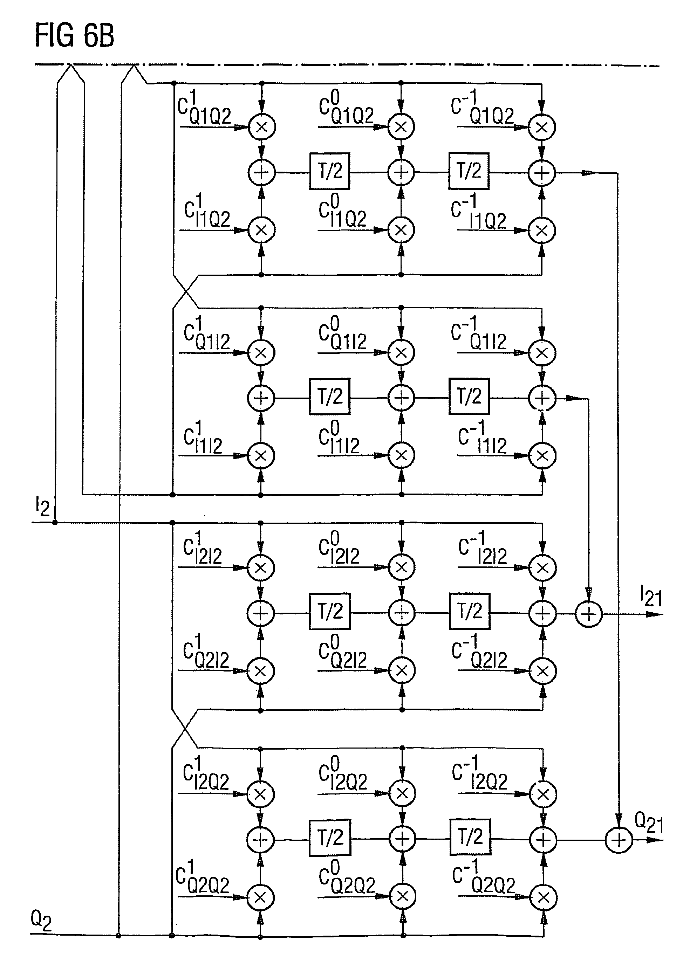

**In Figur 6** ist ein Prinzipschaltbild eines Transversalfilters 16 zur Verarbeitung von orthogonalen elektrischen Komponenten dargestellt, mit dem die Mehrphasensignale QPS1 und QPS2 in der elektrischen Ebene zu rekonstruieren sind. Die elektrischen Komponenten $I_1$, $Q_1$ bzw. $I_2$, $Q_2$ werden dem mehrdimensionalen Filter 16 zugeführt. Da jeweils vier Signalkomponenten zu verarbeiten und abzugeben sind, ist dies ein vierdimensionales Filter, das über vier Eingänge und vier Ausgänge verfügt.

Die Konstruktion des Filters ermöglicht es, sämtliche Eingangssignale mit beliebigen Filterkoeffizienten zu multiplizieren und auf jeden der vier Ausgänge additiv durchzuschalten. Durch das verwendete "fractional spacing" können auch asynchrone Mehrphasensignale verarbeitet werden.

Die am Ausgang des Filters 16 abgegebenen orthogonalen rekonstruierten Signalkomponenten $I_{11}$, $Q_{11}$ bzw. $I_{21}$, $Q_{21}$ entsprechen jeweils - von der optoelektrischen Umsetzung und einer Rotation abgesehen - den Quadratur-Phasensignalen QPS1 bzw. QPS2.

Durch die lineare Umsetzung der optischen Signale ergibt sich ein weiterer Vorteil der Erfindung. Ebenso wie im optischen Bereich kann eine optimale Entzerrung erfolgen. Chromatische Dispersion und Polarisationsmodendispersion können bei einem entsprechend aufgebauten Filter 16 oder einem diesem nachgeschalteten Filter weitgehend entzerrt werden. Zur Entzerrung können die bekannten Mess- und Regelungsverfahren eingesetzt werden, auf die hier aber nicht eingegangen werden soll.

Das rekonstruierte Signal $I_{11} + jQ_{11}$ bzw. dessen orthogonale Signalkomponenten $I_{11}$, $Q_{11}$ werden dem ersten Demodulator 17 zugeführt, während die rekonstruierten Signalkomponenten $I_{21}$, $Q_{21}$ dem zweiten Demodulator 18 zugeführt werden.

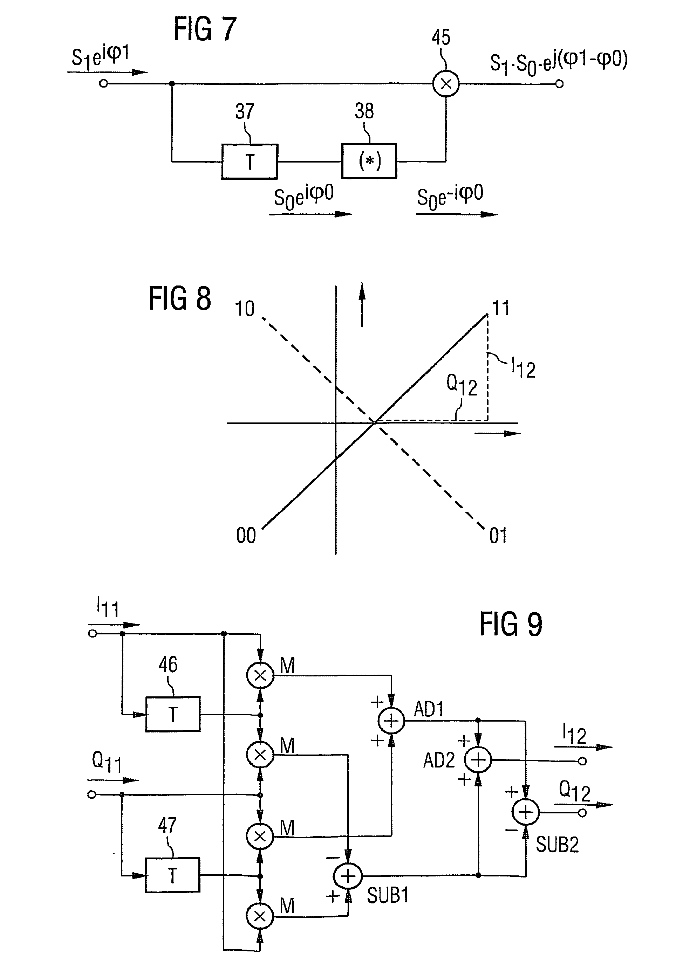

Figur 7 zeigt ein vereinfachtes Prinzipschaltbild eines komplexen Demodulators. Dieser enthält ein Laufzeitglied 37 und eine damit in Serie angeordnete Rechenschaltung 38 zur Bildung des konjugiert komplexen Wertes sowie einen Multiplizierer 45. Die Demodulation beruht auf dem Prinzip der Vektormultiplikation zweier aufeinanderfolgender Symbole.

Der Demodulator multipliziert jeweils den aktuellen Signalwert $S_1 e^{j\phi 1}$ (= $I_{11} + jQ_{11}$) mit dem vorangegangenen komplex konjugierten Signalwert $S0 e^{-j\phi 0}$, wodurch man als Resultat das Produkt $(S_1 \times S_0) e^{j(\phi - \phi 0)}$ der Amplituden und die Differenz der Phasenwerte erhält. Die Phasenwerte können zwischen 0 und 270° schwanken, nehmen aber im Idealfall die Werte 0°, 90°, 180°, 270° an. Um eine Zerlegung in orthogonale Komponenten besser durchführen zu können, wird das Ergebnis um 45° durch Multiplikation mit (1+j) gedreht. Der einzelnen Komponente ist dann jeweils ein Bit zugeordnet, das jeweils durch einen der separaten Schwellwertentscheider 19 - 22 festgelegt wird.

Das Diagramm in **Figur 8** zeigt die lagen des demodulierten Signals bei verschiedenen Bitkombinationen A, B. Eine aktuelle Bitkombination "11" ist mit durchgezogenen Linien dargestellt, die anderen Bitkombinationen 10, 01, 00 sind gestrichelt dargestellt. Man erkennt, dass die Schwellen der Entscheiderstufen 19 - 22 mit dem Achsenkreuz zusammenfallen.

Jeder dieser Demodulatoren liefert also unabhängig von der Lage der Eingangssignale unabhängige Ergebnisse, wobei die langsame Rotation der Eingangssignale vernachlässigt werden kann. Jeder Demodulator liefert bereits

Komponenten $I_{12}$, $Q_{12}$ bzw. $I_{22}$ und $Q_{22}$ der demodulierten Signale $I_{12}+jQ_{12}$ bzw. $I_{22} + jQ_{22}$. Jeweils zwei orthogonale Signalkomponenten entsprechen einer Bitkombination.

Figur 9 zeigt ein Prinzipschaltbild des Demodulators 17 zur Verarbeitung von orthogonalen Komponenten $I_{11}$ bzw. $Q_{11}$, die seinen Eingängen zugeführt werden. Die erforderlichen mathematischen Operationen werden für den realen und imaginären Signalanteil der aktuellen und der vorhergehenden orthogonalen Komponenten entsprechend der Darstellung durchgeführt. Zwei Laufzeitglieder 46 und 47 speichern die vorhergehenden Signalkomponenten. Nach der Multiplikation der Komponenten in den Multiplikatoren M werden Summenwerte von den Addierern AD1 und AD2 und Differenzwerte von den Subtrahieren SUB1 und SUB2 gebildet, um die Komponenten $I_{12}$ und $Q_{12}$ des demodulierten Signals zu erhalten.

Darüber hinaus kann auch eine Information zur Taktregeneration gewonnen werden.

Die Entscheiderstufen 19 -22 ermöglichen nach Figur 2 direkt eine Umsetzung der demodulierten Signalkomponenten $I_{12}$, $Q_{12}$, $I_{22}$, $Q_{22}$ in empfangsseitige Binärsignale $A_E$, $B_E$, $C_E$ und $D_E$, die den sendeseitigen Binärsignalen A, B, C, D entsprechen.

Zur Ermittlung und Einstellung der Filterkoeffizienten ist die Steuerung 23 (COR- Korrelation; COM - Kompensation) vorgesehen. Diese weist außerdem einen Trägerfrequenz-Regler 24 auf, der den empfangsseitigen Trägerfrequenz-Oszillator 12 steuert. Außerdem enthält einen Entscheidertakt-Regenerator 25.

Zur Ermittlung der Koeffizienten können verschiedene an sich bekannte Verfahren verwendet werden. Grundlage für den Adaptionsalgorithmus können die orthogonalen Signalkomponenten $I_{11}$, $Q_{11}$, $I_{21}$, $Q_{21}$ oder/und die demodulierten Signalkomponenten $I_{12}$, $Q_{12}$; $I_{22}$, $Q_{22}$ sein. Man geht hierbei von den bekannten Erwartungswerten aus, um Abweichungen von diesen Erwartungswerten, die Fehler, Fehler zu bestimmen. Diese Fehler werden durch Variieren der Filterkoeffizienten minimiert.

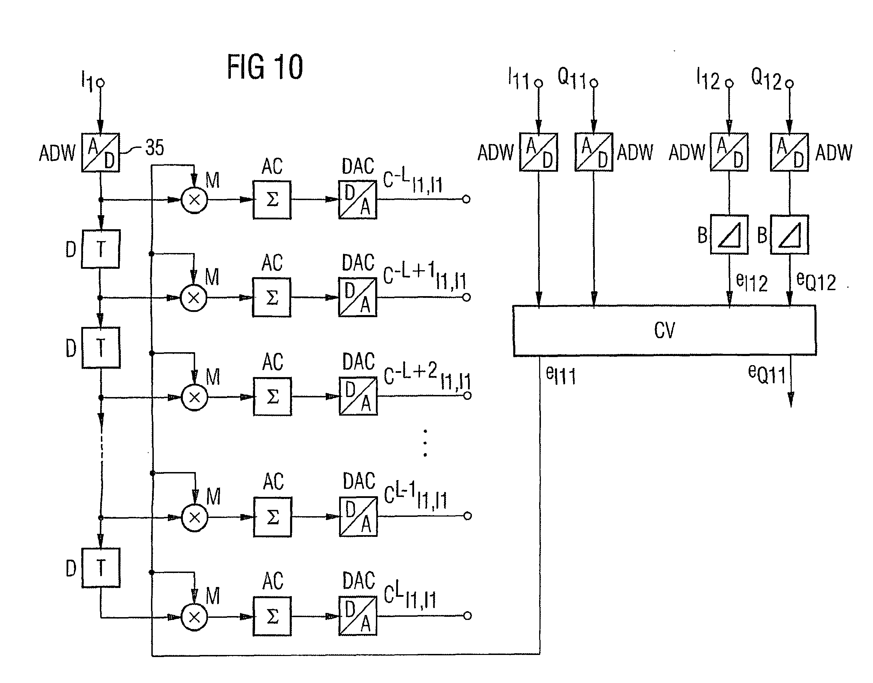

**In Figur 10** ist eine Anordnung zur Gewinnung der Filterkoeffizienten basierend auf dem "minimum mean-square error" (MMSE) dargestellt. Diese digital arbeitende Anordnung setzt zunächst mittels Analog-Digital Wandlern ADW die analogen Signalkomponenten $I_1$, $Q_1$, $I_2$, $Q_2$, $I_{11}$, $Q_{11}$, $I_{21}$, $Q_{21}$ in digitale Signale um. Dargestellt ist allerdings zur Vereinfachung nur der Filterteil zwischen dem Eingang des Filters, an dem die orthogonale Komponenten $I_1$ anliegen, und dem Ausgang, an dem die rekonstruierte Signalkomponenten $I_{11}$ ausgegeben werden.

Die orthogonale Komponente $I_1$ wird durch Laufzeitglieder D mehrmals entsprechend den Laufzeitgliedern des mehrdimensionalen Filters 16 verzögert wird. Jeder Ausgang der Laufzeitglieder D ist mit jeweils einem Multiplizierer M verbunden. Den zweiten Eingängen der Multiplizierer wird ein Fehlersignal $e_{I11}$ zugeführt.

Dieses Fehlersignal und das der zugehörigen orthogonalen Komponente können aus Fehlersignalen $e_{I12}$ und $e_{Q12}$ der demodulierten Signalkomponenten ermittelt werden. Durch Vergleich zwischen Soll- und Ist-Werten der demodulierten Signalkomponenten $I_{12}$, $Q_{12}$ (bzw. $I_{22}$, $Q_{22}$) werden zunächst in Bewertungsschaltungen B die Fehler $e_{I12}$ und $je_{Q12}$ ermittelt. Zur Regelung der Koeffizienten sind jedoch die Fehler der orthogonalen Signalkomponente $I_{11}$, $Q_{11}$ bzw. $I_{21}$, $Q_{21}$ erforderlich. Diese erhält man, indem die im Modulator durchgeführte Multiplikation mit dem vorhergehenden konjugiert komplexen Signalwert in einer Rechenschaltung CU rückgängig gemacht wird, d.h., dass nochmals mit dem vorhergehenden Signalwert multipliziert wird. Hierdurch ergibt sich die folgende Gleichung für den Fehler der Signalkomponenten $I_{11}$, $Q_{11}$ bzw. $I_{21}$, $Q_{21}$ :

$$(6) \qquad e_{I11} + je_{Q11} = \left(e_{I12} + je_{Q12}\right)\left(I_{11} + jQ_{11}\right),$$

hieraus erhält man für die Fehler der orthogonalen Signalkomponenten:

$$(7) \qquad e_{I11} + je_{Q11} = e_{I12}I_{11} - e_{Q12}Q_{11} + j\left(e_{Q12}I_{11} + e_{I12}Q_{11}\right).$$

Aufgeteilt in Realteil (I) und Imaginärteil (Q) ergeben sich hiermit die Gleichungen für den Derotator

$$(8) \qquad e_{I11} = I_{11}e_{I12} - Q_{11}e_{Q12}$$

$$(9) \qquad e_{Q11} = I_{11}e_{Q12} + Q_{11}e_{I12}$$

schen Wandlern 14 und 15 erfolgt eine Analog-Digital-Umsetzung durch die Analog-Digital-Wandler 41-44. Die weitere Signalverarbeitung erfolgt digital mit Hilfe eines Taktsignals CL. Das Filter 16 und die Demodulatoren sind durch digital arbeitende Schaltungen D16, D17, D18 ersetzt. Diese Realisierung ist jetzt aber noch aufgrund der hohen Datenraten nicht wirtschaftlich.

Das steuerbare Filter 16 kann auch als optisches Filter ausgeführt werden. Ideal wäre es dann, wenn die Umsetzer ebenfalls rein optisch ausgeführt sind und ein amplitudenmoduliertes optisches Signal abgäben.

Die Steuerung kann über ihre bereits beschriebenen Funktionen hinaus die Signalqualität ermitteln. Hierfür sind zahlreiche Methoden bekannt, die beispielsweise auf unterschiedlichen Entscheiderschwellen zur Erstellung von Amplitudenhistogrammen fußen. Ebenso kann eine Fehlerkorrektureinrichtung relevante Aussagen liefern. Ursachen für eine schlechte Signalqualität sind häufig Signalverzerrungen durch die Übertragungsfaser wie chromatische Dispersion und Polarisationsmodendispersion. Da die optoelektrische Signalumsetzung linear erfolgte, kann ebenfalls eine gleichwertige elektrische Entzerrung erfolgen.
Auch diese erfolgt durch Koeffizientensteuerung des Filters 16.

Ergänzend soll nun darauf hingewiesen werden, dass ein entsprechend abgewandelter Empfangsteil ebenfalls bei anderen Modulationsarten eingesetzt werden kann.

**Patentansprüche**

1. Verfahren zur Übertragung von optischen Polarisationsmultiplexsignalen, bei dem mindestens ein erstes Binärsignal (A, B) in ein erstes optisches Signal (QPS1) und mindestens ein zweites Binärsignal (D, C) in ein zweites hierzu orthogonal polarisiertes optisches Signal (QPS2) umgesetzt werden, dann die orthogonal polarisierten optischen Signale (QPS1, QPS2) zu einem Polarisationsmultiplexsignal (PMS) zusammengefügt und anschließend übertragen werden,
**dadurch gekennzeichnet,**
**dass** empfangsseitig das Polarisationsmultiplexsignal (PMS) in zwei orthogonal polarisierte Signalteile (PS1, PS2) aufgeteilt wird,
**dass** jedes polarisierte Signalteil (PS1; PS2) linear in ein komplexes Signal ($I_1 + jQ_1$; $I_2 + jQ_2$) umgesetzt wird,
die komplexen Signale ($I_1 + jQ_1$; $I_2 + jQ_2$) einem mehrdimensionalen Filter (16) zugeführt werden, dessen Koeffizienten ($C_{ii}$) so gesteuert werden,
**dass** an den Filterausgängen unabhängig von der Polarisation des empfangenen Polarisationsmultiplexsignals (PMS) rekonstruierte Signale ($I_{11} + jQ_{11}$; $I_{12} + jQ_{12}$) abgegeben werden, die den optischen Signalen (QPS1, QPS2) entsprechen, und
**dass** die rekonstruierten Signale ($I_{11} + jQ_{11}$; $I_{21} + jQ_{21}$) demoduliert und in empfangsseitige Binärsignale ($A_E$, $B_E$; $C_E$, $D_E$) umgesetzt werden.

2. Verfahren nach Anspruch 1,
**dadurch gekennzeichnet,**
**dass** jeder polarisierte Signalteil (PS1; PS2) linear in ein zwei orthogonale Komponenten ($I_1$, $Q_1$; $I_2$, $Q_2$) aufweisendes komplexes elektrisches Signal ($I_1 + jQ_1$; $I_2 + jQ_2$) umgesetzt wird,
**dass** dessen orthogonale Komponenten ($I_1$, $Q_1$; $I_2$, $Q_2$) dem steuerbaren mehrdimensionalen Filter (16) zugeführt werden, das aus diesen orthogonalen Komponenten ($I_1$, $Q_1$; $I_2$, $Q_2$) die rekonstruierte Signale ($I_{11} + jQ_{11}$; $I_{12} + jQ_{12}$) in Form von rekonstruierten Signalkomponenten ($I_{11}$, $Q_{11}$; $I_{21}$, $Q_{21}$) gewinnt.

3. Verfahren nach Anspruch 2,
**dadurch gekennzeichnet,**
**dass** die polarisierten Signalteile (PS1, PS2) in die komplexen Signale ($I_1 + jQ_1$; $I_2 + jQ_2$) bzw. die orthogonalen Komponenten ($I_1$, $Q_1$; $I_2$, $Q_2$) des Basisbandes umgesetzt werden.

4. Verfahren nach Anspruch 1 oder 2,
**dadurch gekennzeichnet,**
**dass** die Binärsignale (A, B; C, D) in optische Mehrphasensignale (QPS1; QPS2) umgesetzt werden.

**5.** Verfahren nach Anspruch 1 oder 2,
**dadurch gekennzeichnet,**
**dass** jeweils zwei Binärsignale (A, B; C, D) mittels vierstufiger differentieller Phasenmodulation in Mehrphasensignale (QPS1; QPS2) umgesetzt werden.

**6.** Verfahren nach Anspruch 4 der 5,
**dadurch gekennzeichnet,**
**dass** bei Vierphasenmodulation oder bei vierstufiger differentielle Phasenmodulation durch Demodulation der rekonstruierten Signale ($I_{12} + jQ_{12}$; $I_{22} + jQ_{22}$) oder derer Signalkomponenten ($I_{11}$, $Q_{11}$; $I_{12}$, $Q_{12}$) demodulierte Signalkomponenten ($I_{12}$, $Q_{12}$; $I_{22}$, $Q_{22}$) erzeugt werden und
**dass** die Signalkomponenten ($I_{12}$, $Q_{12}$; $I_{22}$ $Q_{22}$) der demodulierten Signale ($I_{12} + jQ_{12}$; $I_{22} + jQ_{22}$) separat durch Schwellwertentscheidungen bewertet und in empfangsseitige Binärsignale ($A_E$, $B_E$, $C_E$, $D_E$) werden.

**7.** Verfahren nach Anspruch 5,
**dadurch gekennzeichnet,**
**dass** bei vierstufiger differentieller Phasenmodulation eine Demodulation durch Vektormultiplikation aufeinanderfolgender rekonstruierter Signalwerte ($I_{11} + jQ_{11}$; $I_{21} + jQ_{21}$) bzw. derer Signalkomponenten ($I_{11}$, $Q_{11}$, $I_{21}$, $Q_{21}$) erfolgt,
**dass** die demodulierten Signalwerte ($I_{12} + jQ_{12}$; $I_{22} + jQ_{22}$) um 45° oder einem Vielfachen hiervon gedreht werden und
**dass** die zugehörigen Signalkomponenten ($I_{12}$, $Q_{12}$; $I_{22}$, $Q_{22}$) durch Schwellwertentscheidungen in empfangsseitige Binärsignale ($A_E$, $B_E$, $C_E$, $D_E$) umgesetzt werden.

**8.** Verfahren nach einem der vorhergehenden Ansprüche,
**dadurch gekennzeichnet,**
**dass** ein Datensignal (DS) höherer Datenrate durch Seriell-Parallel-Umsetzung in mehrere Binärsignale (A, B, C, D) umgesetzt wird.

**9.** Verfahren nach einem der vorhergehenden Ansprüche,
**dadurch gekennzeichnet,**
**dass** die optischen Signale (QPS1, QPS2) phasensynchron übertragen werden.

**10.** Verfahren nach Anspruch 5,
**dadurch gekennzeichnet,**
**dass** die Filterkoeffizienten ($C_{ii}$) des mehrdimensionalen Filters (16) aus den Fehlern ($e_{I11}$ und $e_{Q11}$, ...) der demodulierten Signale ($I_{11} + jQ_{11}$, ...) gewonnen werden.

**11.** Verfahren nach Anspruch 5,
**dadurch gekennzeichnet,**
**dass** die Filterkoeffizienten des mehrdimensionalen Filters (16) aus den Fehlern ($e_{I12}$ und $e_{Q12}$, ...) der decodierten Signale ($I_{12} + jQ_{12}$, ...) gewonnen werden.

**12.** Verfahren nach einem der vorhergehenden Ansprüche,
**dadurch gekennzeichnet,**
**dass** die Signalqualität gemessen wird und Signalverzerrungen der komplexen Signale und/oder der rekonstruierten Signale ($I_1 + jQ_1$; $I_2 + jQ_2$; $I_{11} + JQ_{11}$; $I_{21} + jQ_{21}$) kompensiert werden.

**13.** Verfahren nach einem der vorhergehenden Ansprüche,
**dadurch gekennzeichnet,**
**dass** die Signalverzerrungen durch Steuerung der Filterkoeffizienten ($C_{ii}$) des Filters (16) kompensiert werden.

**14.** Verfahren nach einem der vorhergehenden Ansprüche,
**dadurch gekennzeichnet,**
**dass** die orthogonalen Komponenten ($I_1$, $Q_1$; $I_2$, $Q_2$) digitalisiert in einem steuerbaren digitalen Filter (D16) zur Gewinnung der rekonstruierten Signale ($I_{11} + jQ_{11}$; $I_{21} + j Q_{21}$) verarbeitet werden.

**15.** Verfahren nach einem der vorhergehenden Ansprüche,
**dadurch gekennzeichnet,**
**dass** die orthogonalen Komponenten ($I_1$, $Q_1$; $I_2$, $Q_2$) als optische Signale in einem steuerbaren optischen Filter (O16) zur Gewinnung von optischen rekonstruierten Signale ($I_{11} + jQ_{11}$; $I_{21} + jQ_{21}$) verarbeitet werden.

**Claims**

1. Method for the transmission of polarization multiplexed optical signals, in which at least one first binary signal (A, B) is converted into a first optical signal (QPS1) and at least one second binary signal (D, C) is converted into a second optical signal (QPS2) which is polarized orthogonally with respect to said first optical signal, the orthogonally polarized optical signals (QPS1, QPS2) are then combined to form a polarization multiplexed signal (PMS) and are then transmitted,

   **characterized in that**

   the polarization multiplexed signal (PMS) is split into two orthogonally polarized signal elements (PS1, PS2) at the reception end,

   **in that** each polarized signal element (PS1; PS2) is linearly converted into a complex signal ($I_1 + jQ_1$; $I_2 + jQ_2$), the complex signals ($I_1 + jQ_1$; $I_2 + jQ_2$) are supplied to a multidimensional filter (16) whose coefficients ($C_{ii}$) are controlled in such a manner that

   reconstructed signals ($I_{11} + jQ_{11}$; $I_{12} + jQ_{12}$) which correspond to the optical signals (QPS1, QPS2) are output at the filter outputs irrespective of the polarization of the received polarization multiplexed signal (PMS), and

   the reconstructed signals ($I_{11} + jQ_{11}$; $I_{21} + jQ_{21}$) are demodulated and are converted into reception-end binary signals ($A_E$, BE; $C_E$, $D_E$).

2. Method according to Claim 1,

   **characterized in that**

   each polarized signal element (PS1; PS2) is linearly converted into a complex electrical signal ($I_1 + jQ_1$; $I_2 + jQ_2$) having two orthogonal components ($I_1$, $Q_1$; $I_2$, $Q_2$),

   **in that** the orthogonal components ($I_2$, $Q_1$; $I_2$, $Q_2$) thereof are supplied to the controllable multidimensional filter (16) which obtains the reconstructed signals ($I_{11} + jQ_{11}$; $I_{12} + jQ_{12}$) in the form of reconstructed signal components ($I_{11}$, $Q_{11}$; $I_{21}$, $Q_{21}$) from these orthogonal components ($I_1$, $Q_1$; $I_2$, $Q_2$).

3. Method according to Claim 2,

   **characterized in that**

   the polarized signal elements (PS1, PS2) are converted into the complex signals ($I_1 + Q_1$; $I_2 + jQ_2$) and the baseband orthogonal components ($I_1$, $Q_1$; $I_2$, $Q_2$).

4. Method according to Claim 1 or 2,

   **characterized in that**

   the binary signals (A, B; C, D) are converted into optical multiphase signals (QPS1; QPS2).

5. Method according to Claim 1 or 2,

   **characterized in that**

   two binary signals (A, B; C, D) are respectively converted into multiphase signals (QPS1; QPS2) using four-stage differential phase modulation.

6. Method according to Claim 4 or 5,

   **characterized in that**

   in the case of four-phase modulation or four-stage differential phase modulation, demodulated signal components ($I_{12}$, $Q_{12}$; $I_{22}$, $Q_{22}$) are generated by demodulating the reconstructed signals ($I_{12} + jQ_{12}$; $I_{22} + j jQ_{22}$) or their signal components ($I_{11}$, $Q_{11}$; $I_{12}$, $Q_{12}$), and

   **in that** the signal components ($I_{12}$, $Q_{12}$; $I_{22}$, $Q_{22}$) of the demodulated signals ($I_{12} + jQ_{12}$; $I_{22} + jQ_{22}$) are assessed separately by means of threshold value decisions and are converted into reception-end binary signals ($A_E$, $B_E$, $C_E$, $D_E$).

7. Method according to Claim 5,

   **characterized in that**

   in the case of four-stage differential phase modulation, demodulation is carried out by means of vector multiplication of successive reconstructed signal values ($I_{11} + jQ_{11}$; $I_{21} + jQ_{21}$) or their signal components ($I_{11}$, $Q_{11}$; $I_{21}$, $Q_{21}$),

   **in that** the demodulated signal values ($I_{12} + jQ_{12}$; $I_{22} + jQ_{22}$) are rotated through 45° or a multiple thereof, and

   **in that** the associated signal components ($I_{12}$, $Q_{12}$; $I_{22}$, $Q_{22}$) are converted into reception-end binary signals ($A_E$, $B_E$, $C_E$, $D_E$) by means of threshold value decisions.

8. Method according to one of the preceding claims,

**characterized in that**
a data signal (DS) with a relatively high data rate is converted into a plurality of binary signals (A, B, C, D) by means of serial/parallel conversion.

9. Method according to one of the preceding claims,
**characterized in that**
the optical signals (QPS1, QPS2) are transmitted such that their phases are synchronized.

10. Method according to Claim 5,
**characterized in that**
the filter coefficients ($C_{ii}$) of the multidimensional filter (16) are obtained from the errors ($e_{I11}$ and $e_{Q11}$, ...) of the demodulated signals ($I_{11} + jQ_{11}$, ...).

11. Method according to Claim 5,
**characterized in that**
the filter coefficients of the multidimensional filter (16) are obtained from the errors ($e_{I12}$ and $e_{Q12}$, ...) of the decoded signals ($I_{12} + jQ_{12}$, ...) .

12. Method according to one of the preceding claims,
**characterized in that**
the signal quality is measured and signal distortion of the complex signals and/or of the reconstructed signals ($I_1 + jQ_1$; $I_2 + jQ_2$; $I_{11} + jQ_{11}$; $I_{21} + jQ_{21}$) is compensated for.

13. Method according to one of the preceding claims,
**characterized in that**
the signal distortion is compensated for by controlling the filter coefficients ($c_{ii}$) of the filter (16).

14. Method according to one of the preceding claims,
**characterized in that**
the orthogonal components ($I_1$, $Q_1$; $I_2$, $Q_2$) are processed in digitized form in a controllable digital filter (D16) in order to obtain the reconstructed signals ($I_{11} + jQ_{11}$; $I_{21} + jQ_{21}$).

15. Method according to one of the preceding claims,
**characterized in that**
the orthogonal components ($I_1$, $Q_1$; $I_2$, $Q_2$) are processed as optical signals in a controllable optical filter (O16) in order to obtain optical reconstructed signals ($I_{11} + jQ_{11}$; $I_{21} + jQ_{21}$).


**Revendications**

1. Procédé pour la transmission de signaux optiques de multiplexage en polarisation, dans lequel au moins un premier signal binaire (A, B) est converti en un premier signal (QPS1) optique et au moins un second signal binaire (D, C) en un second signal optique (QPS2) polarisé orthogonalement par rapport au premier, et les signaux optiques (QPS1, QPS2) polarisés orthogonalement sont assemblés ensuite pour former un signal de multiplexage en polarisation (PMS) et sont transmis ensuite,
**caractérisé en ce que**,
côté réception, le signal de multiplexage en polarisation (PMS) est subdivisé en deux parties de signal (PS1, PS2) polarisées orthogonalement,
**en ce que** chaque partie de signal (PS1 ; PS2) polarisée est convertie linéairement en un signal ($I_1 + jQ_1$ ; $I_2 + jQ_2$) complexe,
les signaux ($I_1 + jQ_1$ ; $I_2 + jQ_2$) complexes sont amenés à un filtre (16) multidimensionnel, dont les coefficients ($C_{ii}$) sont commandés de telle sorte que
sont délivrés sur les sorties de filtre des signaux ($I_{11} + jQ_{11}$ ; $I_{12} + jQ_{12}$) reconstitués, qui correspondent aux signaux (QPS1, QPS2) optiques, indépendamment de la polarisation du signal de multiplexage en polarisation (PMS) reçu et
**en ce que** les signaux ($I_{11} + jQ_{11}$ ; $I_{21} + jQ_{21}$) reconstitués sont démodulés et sont convertis en signaux binaires ($A_E$, $B_E$ ; $C_E$, $D_E$) côté réception.

2. Procédé selon la revendication 1,

**caractérisé en ce que**

chaque partie de signal (PS1 ; PS2) polarisée est convertie linéairement en un signal ($I_1 + jQ_1$ ; $I_2 + jQ_2$) électrique, complexe et présentant deux composantes ($I_1$, $Q_1$ ; $I_2$, $Q_2$) orthogonales,

**en ce que** ses composantes ($I_1$, $Q_1$ ; $I_2$, $Q_2$) orthogonales sont amenées au filtre (16) multidimensionnel commandable, qui, à partir de ces composantes ($I_1$, $Q_1$ ; $I_2$, $Q_2$) orthogonales, obtient les signaux ($I_{11} + jQ_{11}$ ; $I_{12} + jQ_{12}$) reconstitués sous la forme de composantes de signal ($I_{11}$, $Q_{11}$ ; $I_{21}$, $Q_{21}$) reconstituées.

**3.** Procédé selon la revendication 2,
**caractérisé en ce que**
les parties de signal (PS1, PS2) polarisées sont converties dans les signaux ($I_1$, $Q_1$ ; $I_2$, $Q_2$) complexes resp. les composantes ($I_1$, $Q_1$ ; $I_2$, $Q_2$) orthogonales de la bande de base.

**4.** Procédé selon la revendication 1 ou 2,
**caractérisé en ce que**
les signaux binaires (A, B ; C, D) sont convertis en signaux multiphases (QPS1 ; QPS2) optiques.

**5.** Procédé selon la revendication 1 ou 2,
**caractérisé en ce que**
respectivement deux signaux binaires (A, B ; C, D) sont convertis en signaux multiphases (QPS1 ; QPS2) par modulation de phase différentielle à 4 niveaux.

**6.** Procédé selon la revendication 4 ou 5,
**caractérisé en ce que**,
avec une modulation à quatre phases ou avec une modulation de phase différentielle à quatre niveaux, des composantes de signal ($I_{12}$, $Q_{12}$ ; $I_{22}$, $Q_{22}$) démodulées sont générées par démodulation des signaux ($I_{12} + jQ_{12}$ ; $I_{22} + jQ_{22}$) reconstitués ou de leurs composantes de signal ($I_{11}$, $Q_{11}$ ; $I_{12}$, $Q_{12}$) et
**en ce que** les composantes de signal ($I_{12}$, $Q_{12}$ ; $I_{22}$, $Q_{22}$) des signaux ($I_{12} + jQ_{12}$, $I_{22} + jQ_{22}$) démodulés sont évaluées séparément par des décisions de valeur seuil et sont converties en signaux binaires ($A_E$, $B_E$, $C_E$, $D_E$) côté réception.

**7.** Procédé selon la revendication 5,
**caractérisé en ce que**,
avec une modulation de phase différentielle à quatre niveaux, est effectué une démodulation par multiplication vectorielle de valeurs de signal ($I_{11} + jQ_{11}$, $I_{21} + jQ_{21}$) reconstituées consécutives resp. de leurs composantes de signal ($I_{11}$, $Q_{11}$ ; $I_{21}$, $Q_{21}$) ,
**en ce que** les valeurs de signal ($I_{12} + jQ_{12}$, $I_{22} + jQ_{22}$) démodulées sont tournées de 45° ou d'un multiple de ce chiffre et
**en ce que** les composantes de signal ($I_{12}$, $Q_{12}$ ; $I_{22}$, $Q_{22}$) correspondants sont converties par des décisions de valeur seuil en signaux binaires ($A_E$, $B_E$, $C_E$, $D_E$) côté réception.

**8.** Procédé selon l'une quelconque des revendications précédentes,
**caractérisé en ce que**
un signal de données (DS) de débit de données supérieur est converti par conversion série-parallèle en plusieurs signaux binaires (A, B, C, D).

**9.** Procédé selon l'une quelconque des revendications précédentes,
**caractérisé en ce que**
les signaux optiques (QPS1, QPS2) sont transmis de façon synchrone en phase.

**10.** Procédé selon la revendication 5,
**caractérisé en ce que**
les coefficients de filtre ($C_{ii}$) du filtre (16) multidimensionnel sont obtenus à partir des erreurs ($e_{I11}$ et $e_{Q11}$, ...) des signaux ($I_{11} + j_{Q11}$, ...) démodulés.

**11.** Procédé selon la revendication 5,
**caractérisé en ce que**
les coefficients de filtre du filtre (16) multidimensionnel sont obtenus à partir des erreurs ($e_{I12}$ et $e_{Q12}$, ...) des signaux ($I_{12} + jQ_{12}$, ...) décodés.

**12.** Procédé selon l'une quelconque des revendications précédentes,

**caractérisé en ce que**
la qualité de signal est mesurée et des distorsions de signal des signaux complexes et/ou des signaux ($I_1$ + j$Q_1$ ; $I_2$ + j$Q_2$ ; $I_{11}$ + j$Q_{11}$ ; $I_{21}$ + j $Q_{21}$) reconstitués sont compensées.

**13.** Procédé selon l'une quelconque des revendications précédentes,
**caractérisé en ce que**
les distorsions de signal sont compensées par la commande des coefficients de filtre ($C_{ii}$) du filtre (16).

**14.** Procédé selon l'une quelconque des revendications précédentes,
**caractérisé en ce que**
les composantes ($I_1$, $Q_1$ ; $I_2$, $Q_2$) orthogonales sont traitées dans une forme numérisée dans un filtre (D16) numérique commandable pour obtenir les signaux ($I_{11}$ + j $Q_{11}$, $I_{21}$ + j$Q_{21}$) reconstitués.

**15.** Procédé selon l'une quelconque des revendications précédentes,
**caractérisé en ce que**
les composantes ($I_1$, $Q_1$ ; $I_2$, $Q_2$) orthogonales sont traitées sous forme de signaux optiques dans un filtre (O16) optique commandable pour obtenir des signaux ($I_{11}$ + j$Q_{11}$ ; $I_{21}$ + j $Q_{21}$) reconstitués optiques.

**FIG 1**

FIG 2

EP 1 540 858 B1

# FIG 3

# FIG 4

# FIG 5

# FIG 6A

# FIG 6B

## FIG 7

$S_1 e^{i\varphi 1}$

45

$S_1 \cdot S_0 \cdot e^{j(\varphi 1 - \varphi 0)}$

37

38

T

(*)

$S_0 e^{i\varphi 0}$

$S_0 e^{-i\varphi 0}$

## FIG 8

10

11

$I_{12}$

$Q_{12}$

00

01

## FIG 9

$I_{11}$

46

T

M

M

M

M

$Q_{11}$

47

T

AD1

AD2

$I_{12}$

$Q_{12}$

SUB1

SUB2

FIG 10

EP 1 540 858 B1

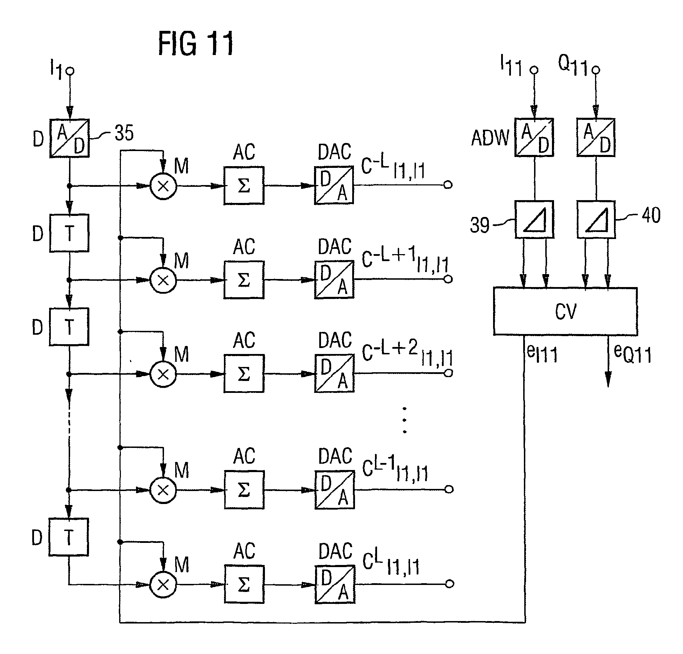

# FIG 11

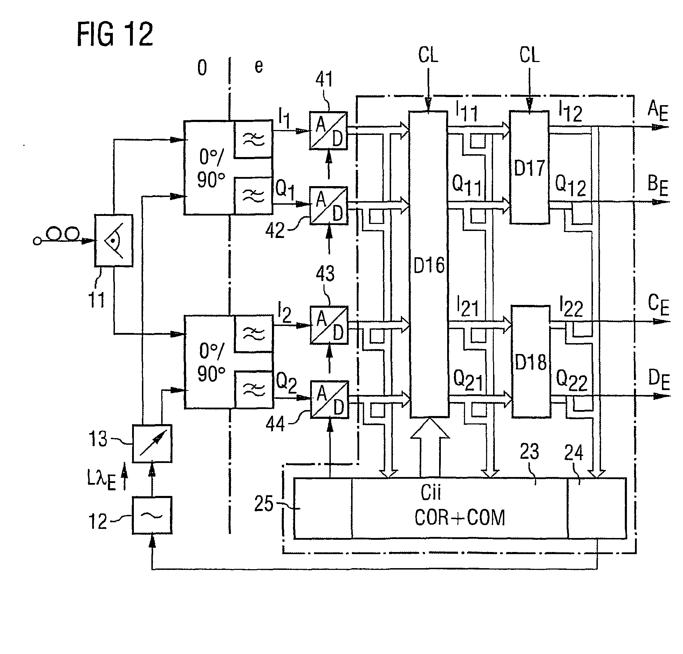

FIG 12

**IN DER BESCHREIBUNG AUFGEFÜHRTE DOKUMENTE**

**In der Beschreibung aufgeführte Patentdokumente**

- DE 10156244 A1